# EUROPEAN PATENT APPLICATION

(11) **EP 0 754 938 A1**
(43) Date of publication of application: **22.01.1997**
(21) Application number: 95305092.9
(22) Date of filing: 20.07.1995
(51) Int. Cl.: G01M 3/20, G01M 3/38

(54) **Detecting fluid leakage route**

(71) Applicant: Tanimura, Kazuaki, Tanabe-shi, Wakayama (JP)
(72) Inventor: Tanimura, Kazuaki, Tanabe-shi, Wakayama (JP)
(74) Representative: Godwin, Edgar James

(57) **Abstract**

An inspection liquid which emits light when irradiated by, for example, ultraviolet radiation is applied to an object suspected of leaking. Then the object is irradiated and light coming from the object is detected so as to detect the route of any leakage of the inspection liquid, which may be an aqueous solution of a diaminostilbene.

## Description

The present invention relates to an inspection method for detecting the route of leakage of fluid in places where no leakage of fluid should be produced such as piping for liquid or gas, tank for liquid or gas, hull, window or body of automobile, house, etc.

For example, in the piping of toilet or sink, it is often the case that leakage of water is produced because of improper execution or deterioration due to aging, etc. If there is any leakage of water, repairing is essential but the point of leakage must be found before the repairing. The conventional method of detecting the point of leakage consists in actually flowing water through the piping and carefully checking the piping with the eyes of a well experienced expert.

However, in the case of any leakage of water, it is often the case that such leakage takes place in piping installed in a dark and narrow place such as under the floor, on the ceiling, inside a wall face, etc., and this makes it difficult to check the point of occurrence of water leakage. Moreover, though there are cases where a leakage is found at points easily recognizable by any person in the room, etc., the leak water drops downward after flowing also in the horizontal direction under the ceiling or along the ceiling or wall face. For that reason, finding the place where water drops does not necessarily mean finding the very source of leakage of water and it is often difficult even for an expert to find the exact point of leakage.

Moreover, even with water leakage at portions easy to observe from outside such as water receiving tank, etc., a long time of observation is necessary to detect the point of leakage in the case of a minimal leakage from pinhole, etc. and it is often the case that, even if the point of leakage can be roughly spotted, it is difficult to confirm the exact point of occurrence of water leakage. Especially with equipment constructed by jointing a plural number of members, the leaking water naturally flows through such points of jointing and, when leakage is produced at a plural number of points, the water from all points of leakage gets together and passes through a single route to eventually drip from a certain point, and this makes it very difficult to accurately detect all the leak points. To be more in detail, water is generally colorless and transparent and the amount of leak water is small. For that reason, even with a long time of observation, it is often the case that no leakage is detected with a leakage of several drops but detection becomes possible only when the leak water from a plural number of points gathers together, so it is very difficult to accurately detect all the leak points. As a result, just repairing one point is not enough to stop the leakage and the inspection and repair work must be repeated a number of times, requiring a long period of time and a large amount of repair cost for complete stopping of the leakage.

Moreover, in structures such as building, house, etc., leakage of rain water is often caused by poor execution or deterioration due to aging, etc. If there is any leakage of rain water, it must be repaired, and the repair work must be preceded by detection of the paint of leakage. For that reason, the method conventionally practiced for finding such points of leakage of rain water is that a well experienced expert carefully watches the structure on a rainy day.

However, if there is any leakage of rain water, the rain water penetrates to the inside through gaps such as crack, etc. and flows downward through the structure. For that reason, finding the point of dropping does not necessarily mean finding of the exact paint of penetration to the inside of the structure, and it is very difficult even for an expert to find the point of leakage of rain water. Especially, when the penetration to inside takes place at a plural number of points, it is often the case that the rain water which penetrates from a plural number of points flows along the structure, gets together, passes through a single route and drops in the room, etc. from a certain point, making it quite difficult to accurately detect all the leak points. Therefore, in such a case, the leakage of rain water cannot be completely stopped even if only one suspected point of leakage is repaired. As a result, the inspection and repair work must be repeated a number of times, requiring a long period of time and a large amount of repair cast for complete stopping of the leakage. The present invention has been proposed in the light of the situation as described above and its object is to provide an inspection method for detecting the route of leakage of fluid at points of water leakage, etc. in the object matters to be inspected easily, accurately and at low cost.

The present invention solves the above-mentioned problem by providing an inspection method for detecting the route of leakage of fluid as set forth in claim 1.

An inspection method according to the present invention consists in preparing an inspection liquid containing a light emitting material which emits light by being irradiated with a beam such as ultraviolet ray, etc., applying the inspection liquid to the object material to be inspected, and then irradiating a beam capable of illuminating inspection liquid such as ultraviolet ray, etc. on the object material to be inspected to illuminate the route through which the inspection liquid flowed so as to detect the route of occurrence of any leakage of fluid in the object material to be inspected. As object materials to be inspected, this method can be widely applied to such materials as piping for liquid or gas, tank for liquid or gas, hull, window or body of automobile, etc. having a space separated from others. Moreover, the present invention can also be applied to the inspection of points of leakage of rain water or water in structures. In the case where the object material to be inspected is a material having a portion for storing water such as tank, etc., it may be all right to prepare an inspection liquid containing a light emitting material by mixing said light emitting material in this stored water.

In the present invention, the inspection liquid is applied to the object material to be inspected. The method of application can be changed as required depending on the structure of the object material to be inspected. It is all right to let flow the inspection liquid inside the piping if the object material to be inspected is a piping, pour the liquid inside the tank in the case of a tank, either float the hull filled with the inspection liquid in a pool or fill the inside of the hull with the inspection liquid if it is a hull, especially a small one, and flow the inspection liquid from outside if the object material to be inspected is either windows or body of automobile, for example. In the case of a structure, first the inspection liquid is let flow instead of rain water from the rooftop of a house, for example, so that it may flow down along the roof. As a result, if there is any point of leakage of rain water somewhere in the roof, a part of the inspection liquid will penetrate into the house through that point and pass through the back side of the roof to eventually drop in the room.

Next, as a beam such as ultraviolet ray, etc. capable of illuminating a light-emitting material is irradiated on the object material to be inspected, the route of occurrence of leakage of fluid in the object material to be inspected emits light so that it may be detected easily.

In this way, the detection of point of leakage can be made with emission of light and this enables easy detection of even slight leakage. In the case of any leakage of rain water, it is possible to draw the route of the inspection liquid from the point of leakage of rain water to the point of dropping in the room.

Therefore, even when the leakage takes place at a plural number of points and the water from those points gets together in to a single stream, the leakage can be detected at the point in time when the leakage is produced at respective points of leakage and the respective leak points can be spotted.

### Brief description of the drawings:

Fig. 1 is an explanatory drawing of a case in which the inspection method of the present invention is applied to a piping equipment.

Fig. 2 is an explanatory drawing of a case in which the inspection method of the present invention is applied to a water receiving tank.

Fig. 3 is an explanatory drawing of a case in which the inspection method of the present invention is applied to a small hull.

Fig. 4 is an explanatory drawing of a case in which the inspection method of the present invention is applied to a structure.

An embodiment of the present invention will be explained concretely hereafter.

The inspection method for detecting point of water leakage in the object material to be inspected of the present invention is a method which consists in applying a prescribed inspection liquid to the object material to be inspected and then applying ultraviolet rays to the object material to be inspected.

The inspection liquid is prepared by containing a light-emitting material which emits light in reaction to at least ultraviolet rays. As this light-emitting material, there is diaminostilbene type organic compound, for example. Diaminostilbene type organic compound has such properties that it emits a blue-white light when irradiated by ultraviolet rays but hardly emits any light with other beams, is harmless to human body and dissolves in water at normal temperature. As product currently marketed for dyeing, there is a product known under the commercial name of Illuminar BBS Conk (trademark of Showa Kako K.K.) and an inspection liquid can be prepared easily by using this. In this embodiment, Illuminar BBS Conk as sold in the market is diluted with water to 100 times the initial volume to be used as inspection liquid. By diluting it with water to this volume, it becomes possible to make the liquid emit hardly any light unless a prescribed quantity of ultraviolet light is irradiated on it and be almost invisible in the normal slate when it is applied to the object material to be inspected.

As ultraviolet rays, a beam irradiated from an ultraviolet irradiation unit is utilized. As this ultraviolet irradiation unit, a unit marketed under the commercial name of Black Light (trademark of Matsushita Electric Industrial Co., Ltd.), for example, is suitable as it irradiates a large amount of ultraviolet rays, and by using this unit it is possible to enable sufficient emission of light even with an inspection liquid diluted with water to 100 times the initial volume. While Black Light already sold in the market is used as such ultraviolet irradiation unit for the sake of convenience in the present embodiments, it may be replaced with any newly manufactured special device or any existing unit as required.

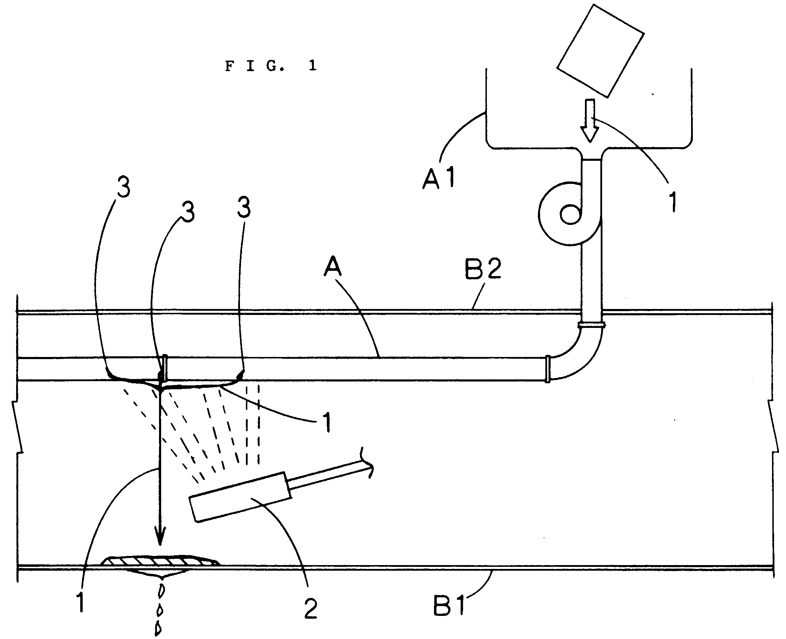

A concrete inspection procedure of the present invention will be explained based on Fig. 1 hereafter.

First, inspection liquid 1 is let flow from upstream (sink A1, in this case) of piping A. As a result, the inspection liquid 1 flows through the piping A to the downstream side. And, if there are any points of water leakage 3 ... 3 at cracks or joints on the way of this piping A, part of the inspection liquid 1 flows out from such points of water leakage 3 ... 3, flows to the back side of the ceiling B1 of the lower story and further drops downstairs from the back side of the ceiling B1. B2 indicates the floor of the story in which a sink A1 is provided. At that time, the flowing inspection liquid 1, which is prepared by sufficiently diluting a light-emitting material with water, hardly emits any visible light in the normal state. Therefore, the inspection liquid 1 is invisible from outside and does not spoil the appearance even if it is not washed away and can therefore be left as it is.

Next, ultraviolet rays are irradiated on the piping A from the back side of the ceiling B1 by means of a Black Light as ultraviolet irradiation unit 2. This makes it possible to visualize the route through which the inspection liquid 1 flowed because the inspection liquid 1 sticking to the piping A emits a blue-white light. Therefore, by following the route through which the inspection liquid 1 flowed, the points of water leakage 3 ... 3 can be easily detected.

In the case of a piping, presence of a leakage is found usually with dripping of water to downstairs and then inspection is started. At that time, by flowing the inspection liquid 1, in the state where ultraviolet rays are irradiated from the ultraviolet irradiation unit 2, at portions where the points of water leakage 3 ... 3 are suspected, it becomes possible to detect such points at a stage where only a small amount of the inspection liquid 1 leaks from the respective points of water leakage 3 ... 3. Therefore, the respective points of water leakage 3 ... 3 can be confirmed individually and accurately. Moreover, in the case where the leakage was detected in the state where the leakage of the inspection liquid 1 of a plural number of routes from the respective points of water leakage 3 ... 3 gets together, the respective points of water leakage 3 ... 3 can be confirmed accurately by once wiping off the inspection liquid 1 of that route of confluence and then flowing the inspection liquid 1 again in the state of irradiation of ultraviolet rays.

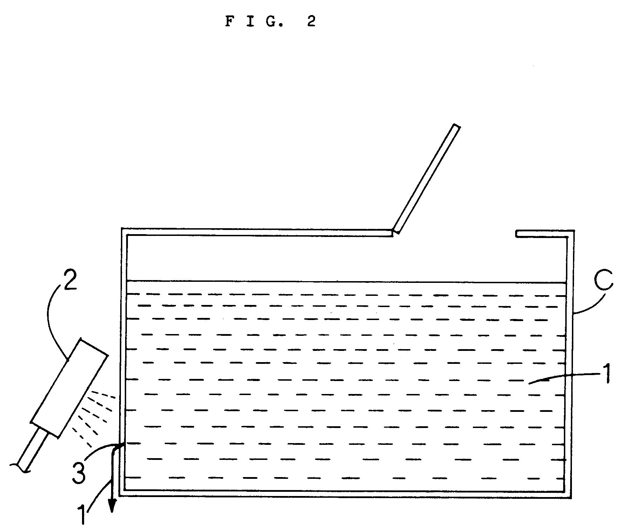

Fig. 2 indicates a case where the object material to be inspected is a water receiving tank C. The detection of leakage can be made by filling the inside of the tank C with the inspection liquid 1 and irradiating ultraviolet rays on the inspection liquid 1 flowing out from the point of water leakage 3 by means of the ultraviolet irradiation unit 2. In that case, the inspection liquid 1 may be prepared outside the tank C as in the embodiment explained earlier but, if water is stored in this tank C, the inspection liquid 1 may also be prepared by using this water. Namely, the water stored in the tank C can be changed into inspection liquid 1 by injecting a light-emitting material in it. To be more concrete, the stock solution of said Illuminar BBS Conk (trademark of Showa Kako K.K.) may be injected in the water stored in the tank C in a volume equal to approximately one hundredth of the water volume.

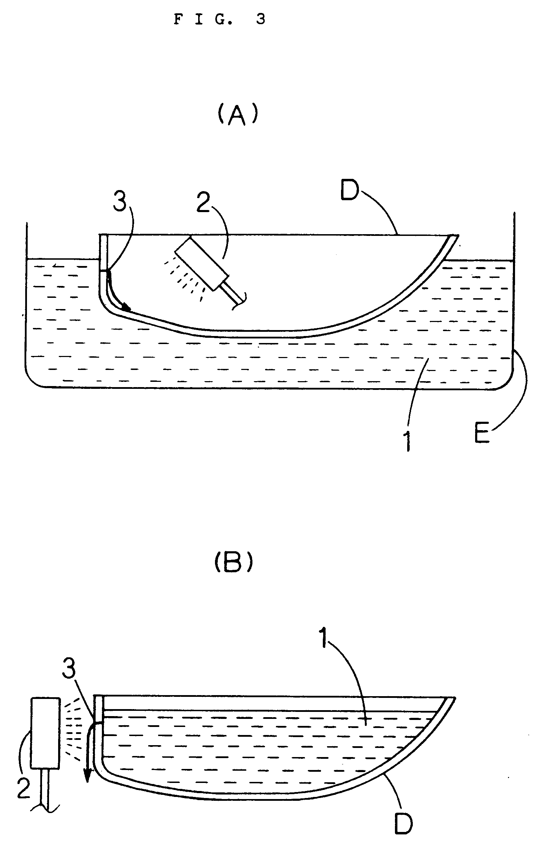

Fig. 3 indicates a case where the object material to be inspected is a small hull D. Fig. 3 (A) represents a case where the hull D is floated in a pool E filled with the inspection liquid 1 and ultraviolet rays are irradiated, by means of the ultraviolet irradiation unit 2, on the inspection liquid 1 leaking inside the hull D from the point of water leakage 3, for verification. Fig. 3 (B) is a case where the hull D is filled with the inspection liquid 1 and ultraviolet rays are irradiated, by means of the ultraviolet irradiation unit 2, on the inspection liquid 1 leaking to outside the hull D from the point of water leakage 3 for verification.

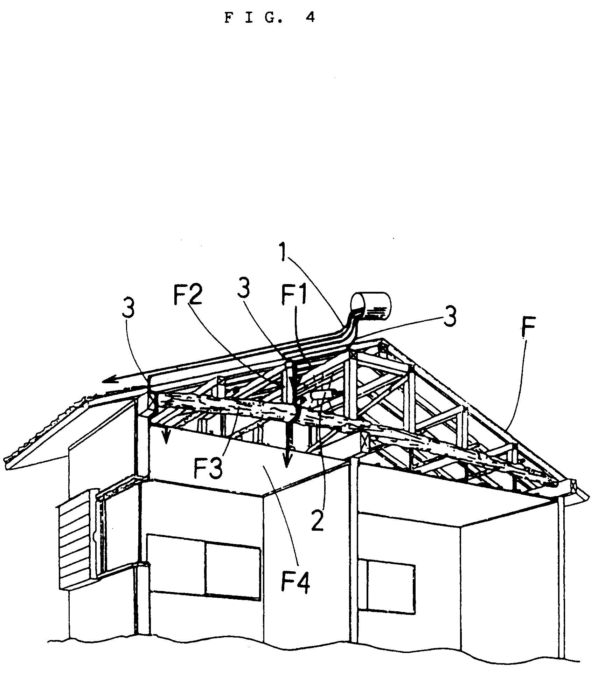

Fig. 4 shows an example of applying the present invention to a structure, especially a wooden house, where the inspection liquid 1 is let flow from the rooftop of the house F. This makes the inspection liquid 1 flow along the roof to the lower part of the roof. And, if there are any points of leakage of rain water 3 ... 3 in the upper, middle, or lower parts of this house F, part of the inspection liquid 1 penetrates into the back side of the roof F1 from such points of leakage of rain water 3 ... 3 and also flows from the back side of the roof F1 along the strut F2 and the tie beam F3 to reach the ceiling F4. At that time, because the inspection liquid 1 that is flowing is prepared by sufficiently diluting a light-emitting material with water, hardly any emission of light can be detected in the normal state. Therefore, the inspection liquid 1 is invisible from outside and does not spoil the appearance even if it is not washed away and can therefore be left as it is on the roof. In the case of a wooden house, leakage of rain water is liable to be frequently produced at the valley of a so-called hip roof, but the case of an ordinary roof is explained here for the sake of convenience. Therefore, in the case of an wooden house having hip roof, the inspection work may be executed effectively if the inspection liquid 1 is let flow mainly in the valley of the hip roof.

Next, ultraviolet rays are irradiated on the strut F2 and the tie beam F3 with Black Light as ultraviolet irradiation unit 2 from the back side of the roof F1. This makes the inspection liquid 1 flowing along the back side of the roof F1, etc. emit a blue-white light to visualize the route of passage of the inspection liquid 1. Therefore, by tracing this passage through which the inspection liquid 1 flowed, it is possible to detect the points of leakage of rain water 3 ... 3 easily and accurately.

While explanation was given on the case of a wooden house in this embodiment, the present invention can be adapted to a variety of structures made of mortar or concrete, etc. In a mortar or concrete structure, it is known that leakage of rain water often takes place at portions where a metallic fence or an aluminium window frame are provided. However, it is not easy to elucidate from which point the rain water comes in and by which route it flows to the inside of the structure. So, by flowing the inspection liquid of the present invention to such parts and visualizing the route of penetration of the inspection liquid with irradiation of ultraviolet rays, the point and the route of penetration can be clarified. Moreover, by visualizing the route of penetration, it also becomes possible to judge if the penetration comes from a crack or if it is caused by deterioration, and take accurate remedial measures.

In addition, though no illustration is made, for automobile body, window glass, and gaps between automobile body and window glass, etc., the detection of leakage can be made by flowing the inspection liquid from outside the car body and irradiating the inspection liquid leaking inside with ultraviolet rays. Moreover, while leakage of liquid such as water, etc. was taken as target of detection in the embodiment, the present invention can also be applied to piping and tank, etc. of gases. Furthermore, it is applicable to not only equipment of household use such as toilet piping, fish tank, etc. but also to external and internal pipings, drainage facilities of bridge for highway, etc. Still more, it is also all right to apply the inspection liquid on the object material to be inspected under pressure such as discharging the inspection liquid at high pressure, etc. by connecting a pump to the tank storing the inspection liquid. Yet more, in a narrow place, it will be all right to attach a camera or a video camera at the tip of a long body (preferably a bendable one) to observe and record the state of emission of light of the inspection liquid in the object material to be inspected. At that time, the irradiation unit for irradiating beam such as ultraviolet rays, etc. can be attached to the tip of another or the same long body. It is also possible to lead the ultraviolet rays, etc. of the irradiation unit placed at a distant position by means of optical fibers and lead the state of emission of light of the inspection liquid to the camera or video camera at hand with optical fibers. It is further possible to connect a compact camera which can be introduced in a narrow place and a monitor at hand by means of a cable.

As described in the embodiment given above, the present invention, which consists in applying an inspection liquid to the object material to be inspected, and then irradiating ultraviolet rays on the object material to be inspected to illuminate and visualize the route of passage of the inspection liquid, makes it possible for anybody, even if he is not an expert, to find points of leakage of water or rain water, etc. easily and accurately and take the necessary remedial measures accurately. In addition, such inspection work can be performed easily and at low costs. As described above, the present invention has succeeded in providing a useful and practical inspection method for finding points of leakage of fluid easily and accurately.

## Claims

1. An inspection method for detecting the route of leakage of fluid on an object, comprising applying to the object an inspection liquid which emits light when irradiated with a given type of radiation, irradiating the object with the said radiation, and detecting light coming from the object so as to detect the route of any leakage of the inspection liquid.

2. An inspection method as claimed in claim 1, wherein the object delimits a space separated from others, the object being, for example, piping for liquid or gas, a tank for liquid or gas, a hull, a window, or the body of an automobile.

3. An inspection method as claimed in claim 1 or 2, wherein the object material comprises means for storing water, such as a tank, and the inspection liquid is prepared by introducing into the stored water a substance which emits light when irradiated by the said radiation.

4. An inspection method as claimed in claim 1, wherein the object is a building structure and the inspection is made to detect points of leakage of water or rainwater in the structure.

5. An inspection method as claimed in any preceding claim, wherein the said radiation is ultraviolet light.

6. An inspection method as claimed in any preceding claim, wherein the inspection liquid is clear and colourless.
